# EUROPÄISCHE PATENTANMELDUNG

(11) **EP 2 983 254 A1**
(43) Veröffentlichungstag der Anmeldung: **10.02.2016**
(21) Anmeldenummer: 15180064.6
(22) Anmeldetag: 06.08.2015
(51) Int. Cl.: H01R 13/703, A47J 43/04

(54) **SYSTEM AUS EINEM ELEKTRISCHEN KÜCHENGERÄT UND EINEM ZUSATZMODUL**

(30) Priorität: 08.08.2014 DE 102014111362
(71) Anmelder: Vorwerk & Co. Interholding GmbH, 42275 Wuppertal (DE)
(72) Erfinder: Lang, Torsten, 42657 Solingen (DE); Greive, Volker, 69126 Heidelberg (DE)
(74) Vertreter: Müller, Enno

(57) **Zusammenfassung**

Die Erfindung betrifft ein System aus einem elektrischen Küchengerät (2) und einem an das elektrische Küchengerät (2) elektrisch anschließbaren Zusatzmodul (3), wobei das elektrische Küchengerät (2) eine elektrische Zusatzmodul-Anschlusseinrichtung (8) mit einer Mehrzahl von Anschlusskontakten (10, 11) zum elektrischen Anschließen des Zusatzmoduls (3) aufweist sowie mit einem Magnetsensor (9) versehen ist, das Zusatzmodul (3) eine elektrische Küchengerät-Anschlusseinrichtung (12) mit einer Mehrzahl von Anschlusskontakten (13, 14) zum elektrischen Anschließen an das Küchengerät (2) aufweist sowie mit einem Magneten (15) versehen ist, wenigstens einer der Anschlusskontakte (10, 11, 13, 14) der Zusatzmodul-Anschlusseinrichtung (8) bzw. der Küchengerät-Anschlusseinrichtung (12) zwischen einem geöffneten Zustand und einem geschlossenen Zustand schaltbar ist, mit dem Magnetsensor (9) des elektrischen Küchengeräts (2) erfassbar ist, ob das Zusatzmodul (3) an der elektrischen Zusatzmodul-Anschlusseinrichtung (8) angeschlossen ist und der schaltbare Anschlusskontakt (11) nur dann zur elektrischen Kontaktierung des elektrischen Küchengeräts (2) mit dem Zusatzmodul (3) schließbar ist, wenn mittels des Magnetsensors (9) erfasst worden ist, dass das Zusatzmodul (3) in vorbestimmter Weise an der elektrischen Zusatzmodul-Anschlusseinrichtung (8) des elektrischen Küchengeräts (2) angeschlossen ist. Damit wird ein derartiges System aus einem elektrischen Küchengerät und einem an das elektrische Küchengerät anschließbaren Zusatzmodul bereitgestellt, das einen sicheren und verlässlichen Betrieb des Zusatzmoduls an der elektrischen Küchenmaschine ermöglicht.

## Beschreibung

Die Erfindung betrifft ein System aus einem elektrischen Küchengerät und einem an das elektrische Küchengerät elektrisch anschließbaren Zusatzmodul, wobei das elektrische Küchengerät eine elektrische Zusatzmodul-Anschlusseinrichtung mit einer Mehrzahl von Anschlusskontakten zum elektrischen Anschließen des Zusatzmoduls aufweist und das Zusatzmodul eine elektrische Küchengerät-Anschlusseinrichtung mit einer Mehrzahl von Anschlusskontakten zum Anschließen an das Küchengerät aufweist.

Derartige elektrische Küchengeräte sind aus der Praxis z.B. in Form von universellen Küchenmaschinen bekannt, die neben einem mechanischen Verarbeiten von Nahrungsmitteln, z.B. mittels eines Rührwerks oder Schneidmessers, auch ein Garen der Nahrungsmittel ermöglichen. Zur Herstellung einer entsprechenden Speise sind häufig vorbestimmte Rezepte vorgesehen, die mehrere aufeinanderfolgende Rezeptschritte aufweisen. Um dem Benutzer eines derartigen elektrischen Küchengeräts das Herstellen einer Speise nach einem derartigen vorbestimmten Rezept zu ermöglichen, kann außerdem vorgesehen sein, Rezeptdaten zu den vorbestimmten Rezepten von außen her auf das elektrische Küchengerät zu übertragen.

Ausgehend von dieser Situation ist es die Aufgabe der Erfindung, ein derartiges System aus einem elektrischen Küchengerät und einem an das elektrische Küchengerät anschließbaren Zusatzmodul bereitzustellen, das einen sicheren und verlässlichen Betrieb des Zusatzmoduls an dem elektrischen Küchengerät ermöglicht.

Diese Aufgabe wird durch den Gegenstand des Patentanspruchs 1 gelöst. Bevorzugte Weiterbildungen der Erfindung sind in den Unteransprüchen beschrieben.

Erfindungsgemäß ist somit ein System aus einem elektrischen Küchengerät und einem an das elektrische Küchengerät elektrisch anschließbaren Zusatzmodul vorgesehen, wobei das elektrische Küchengerät eine elektrische Zusatzmodul-Anschlusseinrichtung mit einer Mehrzahl von Anschlusskontakten zum elektrischen Anschließen des Zusatzmoduls aufweist sowie mit einem Magnetsensor versehen ist, das Zusatzmodul eine elektrische Küchengerät-Anschlusseinrichtung mit einer Mehrzahl von Anschlusskontakten zum elektrischen Anschließen an das Küchengerät aufweist sowie mit einem Magneten versehen ist, wenigstens einer der Anschlusskontakte der Zusatzmodul-Anschlusseinrichtung bzw. der Küchengerät-Anschlusseinrichtung zwischen einem geöffneten Zustand und einem geschlossenen Zustand schaltbar ist, mit dem Magnetsensor des elektrischen Küchengeräts mittels des Magneten des Zusatzmoduls erfassbar ist, ob das Zusatzmodul an der elektrischen Zusatzmodul-Anschlusseinrichtung in vorbestimmter Weise angeschlossen ist, und der schaltbare Anschlusskontakt nur dann zur elektrischen Kontaktierung des elektrischen Küchengeräts mit dem Zusatzmodul schließbar ist, wenn mittels des Magnetsensors erfasst worden ist, dass das Zusatzmodul in der vorbestimmten Weise an der elektrischen Zusatzmodul-Anschlusseinrichtung des elektrischen Küchengeräts angeschlossen ist.

Es ist somit ein wesentlicher Punkt der Erfindung, den vorschriftsmäßigen Anschluss des Zusatzmoduls an dem elektrischen Küchengerät mittels eines Magneten und eines Magnetsensors zu erfassen, um eine elektrische Verbindung zwischen dem Zusatzmodul und dem elektrischen Küchengerät nur dann zu ermöglichen, wenn ein solcher vorschriftsmäßiger Anschluss tatsächlich vorliegt.

Dazu ist wenigstens einer der Anschlusskontakte der Zusatzmodul-Anschlusseinrichtung des elektrischen Küchengeräts bzw. der Küchengerät-Anschlusseinrichtung des Zusatzmoduls zwischen einem geöffneten Zustand und einem geschlossenen Zustand schaltbar. Im geöffneten Zustand des Anschlusskontaktes besteht für die zu diesem schaltbaren Anschlusskontakt zugehörige Leitung zwischen dem elektrischen Küchengerät und dem Zusatzmodul keine Verbindung. Diese elektrische Verbindung wird erst im geschlossenen Zustand hergestellt.

Der schaltbare Anschlusskontakt kann sich erfindungsgemäß also nur dann in seinem geschlossenen Zustand befinden, wenn das Zusatzmodul in der vorbestimmten Weise an dem elektrischen Küchengerät angeschlossen ist. Ist noch kein Anschluss des Zusatzmoduls an das elektrische Küchengerät erfolgt oder ist das Zusatzmodul bereits wieder von dem elektrischen Küchengerät abgenommen, so ist der schaltbare Anschlusskontakt geöffnet.

Wie zuvor erläutert, kann der schaltbare Anschlusskontakt ein Anschlusskontakt der Zusatzmodul-Anschlusseinrichtung oder ein Anschlusskontakt der Küchengerät-Anschlusseinrichtung sein. Gemäß einer bevorzugten Weiterbildung der Erfindung ist jedoch vorgesehen, dass der schaltbare Anschlusskontakt ein Anschlusskontakt der Zusatzmodul-Anschlusseinrichtung des elektrischen Küchengeräts ist. Dabei kann der schaltbare Anschlusskontakt eine Datenleitung oder eine Versorgungsleitung zwischen dem elektrischen Küchengerät und dem Zusatzmodul betreffen. Ganz besonders bevorzugt sind eine Mehrzahl von schaltbaren Anschlusskontakten vorgesehen, und zwar vorzugsweise für wenigstens eine Datenleitung und für wenigstens eine Versorgungsleitung.

Damit sind eine Vielzahl von Vorteilen verbunden. So kann auf diese Weise das elektrische Küchengerät vor Kurzschlüssen geschützt werden, die über außenliegende Kontakte am elektrischen Küchengerät erfolgen könnten, wenn kein Zusatzmodul angebracht ist, z.B. durch Berühren mit einem metallischen Gegenstand, wie einer Gabel. Darüber hinaus kann die elektrische Verbindung zwischen dem Zusatzmodul sowie dem elektrischen Küchengerät auf diese Weise entprellt werden, womit Fehlerimpulse auf den Datenleitungen vermieden werden können.

Gemäß einer bevorzugten Weiterbildung der Erfindung ist ferner vorgesehen, dass der schaltbare Anschlusskontakt automatisch geschlossen wird, wenn mittels des Magnetsensors erfasst worden ist, dass das Zusatzmodul in der vorbestimmten Weise an der elektuschen Zusatzmodul-Anschlusseinrichtung des elektrischen Küchengeräts angeschlossen ist. Gemäß dieser bevorzugten Weiterbildung der Erfindung muss benutzerseitig über den eigentlichen Anschluss des Zusatzmoduls an dem elektrischen Küchengerät hinaus nichts unternommen werden, um das Zusatzmodul für das elektrische Küchengerät verfügbar zu machen. Wenn das Zusatzmodul an dem elektrischen Küchengerät angeschlossen ist, erfolgt nämlich eine automatische Schaltung des schaltbaren Anschlusskontaktes, so dass das Zusatzmodul dem elektrischen Küchengerät zur Verfügung steht.

Dies stellt eine besonders einfache Lösung dar, bei der einem Benutzer des Systems aus dem elektrischen Küchengerät und dem Zusatzmodul praktisch keine Fehlbedienung unterlaufen kann. Alternativ ist gemäß einer bevorzugten Weiterbildung der Erfindung eine Bedieneinrichtung vorgesehen, mit der der schaltbare Anschlusskontakt benutzerseitig schließbar ist. Hier kommt es also nicht zu einem automatischen Schließen des schaltbaren Anschlusskontaktes, wenn das Zusatzmodul in der vorbestimmten Weise an dem elektrischen Küchengerät angeschlossen ist. Vielmehr ist eine Handlung des Benutzers erforderlich, um den schaltbaren Anschlusskontakt zu schließen und damit das Zusatzmodul für das elektrische Küchengerät verfügbar zu machen.

In diesem Zusammenhang ist ferner vorzugsweise eine Anzeigeeinrichtung vorgesehen, mit der angezeigt wird, wenn das Zusatzmodul in der vorbestimmten Weise an der elektrischen Zusatzmodul-Anschlusseinrichtung des elektrischen Küchengeräts angeschlossen ist. Diese Anzeigeeinrichtung gibt zur Anzeige des vorschriftsmäßigen Anschlusses des Zusatzmoduls an dem elektrischen Küchengerät ein Anzeigesignal ab, das es dem Benutzer erlaubt, das Vorliegen des vorschriftsmäßigen Anschlusses zu erfassen. Dieses Anzeigesignal ist vorzugsweise ein optisches Signal oder ein akustisches Signal, es kann jedoch auch vorgesehen sein, dass das elektrische Küchengerät ein kurzes Vibrationssignal abgibt, das dem Benutzer den vorschriftsmäßigen Anschluss des Zusatzmoduls an dem elektrischen Küchengerät anzeigt.

Sind eine Bedieneinrichtung vorgesehen, mit der der schaltbare Anschlusskontakt benutzerseitig schließbar ist, sowie eine Anzeigevorrichtung zur Anzeige des vorschriftsmäßigen Anschlusses des Zusatzmoduls an dem elektrischen Küchengerät, so ist gemäß einer bevorzugten Weiterbildung der Erfindung weiterhin vorgesehen, dass der schaltbare Anschlusskontakt benutzerseitig nur dann schließbar ist, wenn von der Anzeigeeinrichtung angezeigt wird bzw. worden ist, dass das Zusatzmodul in der vorbestimmten Weise an der elektrischen Zusatzmodul-Anschlusseinrichtung des elektrischen Küchengeräts angeschlossen ist. Auf diese Weise können Fehlbedienungen durch den Benutzer vermieden werden, da ein Schließen des schließbaren Anschlusskontaktes nur dann ermöglicht wird, wenn das Zusatzmodul tatsächlich vorschriftsmäßig an dem elektrischen Küchengerät angeschlossen ist und dieser vorschriftsmäßige Anschluss dem Benutzer auch angezeigt wird bzw. worden ist.

Als Magnetsensor für die vorliegende Erfindung kommen verschiedene Einrichtungen in Betracht, mit denen das Vorhandensein eines Magnetfelds erfasst werden kann. Vorzugsweise ist als Magnetsensor jedoch ein Magnetfeldschalter vorgesehen. Mit einem derartigen Magnetfeldschalter kann nicht nur die Anwesenheit eines Magnetfelds erfasst werden, sondern es ist auch möglich, bei Anwesenheit des Magnetfelds einen Schaltvorgang zu initiieren. Ganz besonders bevorzugt ist als Magnetfeldschalter ein Reed-Kontakt oder ein Hall-Sensor vorgesehen.

Dem Zusatzmodul können in dem vorliegenden System unterschiedliche Funktionen zukommen. Gemäß einer bevorzugten Weiterbildung der Erfindung ist das elektrische Küchengerät zur Herstellung von Speisen nach vorbestimmten Rezeptdaten vorgesehen und auf dem Zusatzmodul sind derartige Rezeptdaten abgespeichert. Zusätzlich oder alternativ dazu ist gemäß einer bevorzugten Weiterbildung der Erfindung, gemäß der das elektrische Küchengerät zur Herstellung von Speisen nach vorbestimmten Rezeptdaten vorgesehen ist, auch vorgesehen, dass mit dem Zusatzmodul eine Verbindung zu einem externen Speicher herstellbar ist, auf dem derartige Rezeptdaten abgespeichert sind. In diesem Fall ist es nicht zwingend erforderlich, dass auf dem Zusatzmodul diese Rezeptdaten ebenfalls nochmals abgespeichert werden können. Grundsätzlich genügt nämlich zur Abarbeitung dieser Rezeptdaten ein wenigstens temporäres Speichern im elektrischen Küchengerät. Vorzugsweise ist jedoch eine Zwischenspeicherung in einem Speicher des Zusatzmoduls vorgesehen.

Schließlich ist gemäß einer bevorzugten Weiterbildung der Erfindung das elektrische Küchengerät zur Herstellung von Speisen nach vorbestimmten Rezeptdaten mit einer Mehrzahl von Verarbeitungsfunktionen betreibbar, wobei wenigstens eine dieser Bearbeitungsfunktionen nur dann bereitgestellt wird, wenn mittels des Magnetsensors erfasst worden ist, dass das Zusatzmodul in der vorbestimmten Weise an der elektrischen Zusatzmodul-Anschlusseinrichtung des elektrischen Küchengeräts angeschlossen ist. Das bedeutet, dass die entsprechende Funktion erst dann freigeschaltet wird, wenn das Zusatzmodul an dem elektrischen Küchengerät angebracht ist. Auch dies hilft bei der Vermeidung von Fehlbedienungen, da auf diese Weise vorgesehen sein kann, dass einem Benutzer des Systems aus elektrischem Küchengerät und Zusatzmodul eine erst mittels des Zusatzmoduls bereitgestellte Funktion nur dann angeboten wird, wenn das Zusatzmodul auch vorschriftsmäßig an dem elektrischen Küchengerät angebracht ist.

Die Erfindung wird nachfolgend unter Bezugnahme auf die Zeichnung anhand von bevorzugten Ausführungsbeispielen näher erläutert.

In der Zeichnung zeigt
- Fig. 1: schematisch ein System aus einem elektrischen Küchengerät und einem daran anbringbaren Zusatzmodul gemäß einem ersten bevorzugten Ausführungsbeispiel der Erfindung, wobei das Zusatzmodul noch nicht an dem elektrischen Küchengerät angeschlossen ist,
- Fig. 2: schematisch das System aus dem elektrischen Küchengerät und dem daran anbringbaren Zusatzmodul gemäß dem ersten bevorzugten Ausführungsbeispiel der Erfindung, wobei das Zusatzmodul jetzt an dem elektrischen Küchengerät angeschlossen ist,
- Fig. 3: schematisch ein System aus einem elektrischen Küchengerät und einem daran anbringbaren Zusatzmodul gemäß einem zweiten bevorzugten Ausführungsbeispiel der Erfindung, wobei das Zusatzmodul noch nicht an dem elektrischen Küchengerät angeschlossen ist,
- Fig. 4: schematisch das System aus dem elektrischen Küchengerät und dem daran anbringbaren Zusatzmodul gemäß dem zweiten bevorzugten Ausführungsbeispiel der Erfindung, wobei das Zusatzmodul jetzt an dem elektrischen Küchengerät mechanisch jedoch noch nicht vollständig elektrisch angeschlossen ist, und
- Fig. 5: schematisch das System aus dem elektrischen Küchengerät und dem daran anbringbaren Zusatzmodul gemäß dem zweiten bevorzugten Ausführungsbeispiel der Erfindung, wobei das Zusatzmodul jetzt auch vollständig elektrisch an dem elektrischen Küchengerät angeschlossen ist.

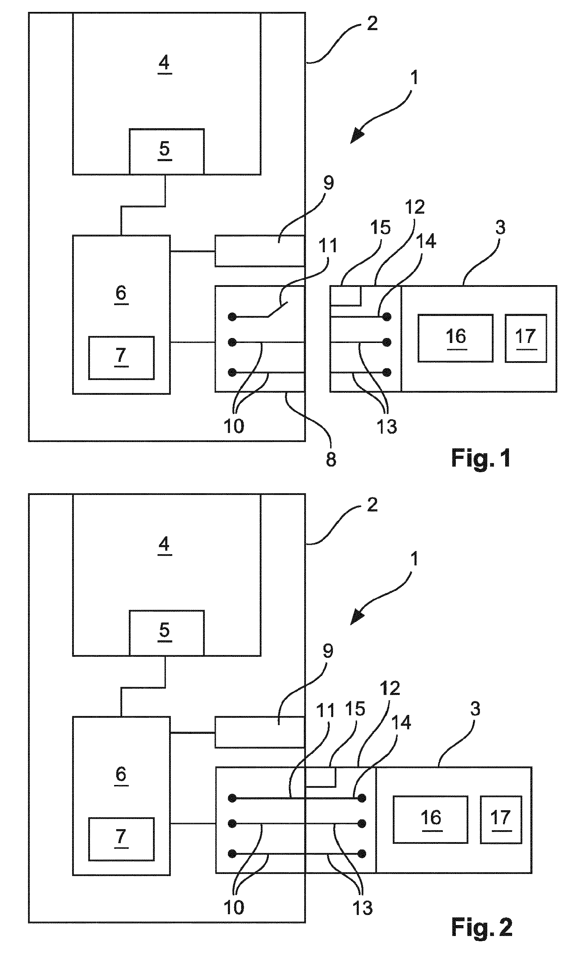

Aus Fig. 1 ist schematisch ein System 1 ein aus einem elektrischen Küchengerät 2 und einem an dem elektrischen Küchengerät 2 anbringbaren Zusatzmodul 3 gemäß einem ersten bevorzugten Ausführungsbeispiel der Erfindung ersichtlich. Das elektrische Küchengerät 2 ist zur Herstellung von Speisen nach vorbestimmten Rezeptdaten vorgesehen und weist dazu eine Mehrzahl von Verarbeitungsfunktionen auf. In dem elektrischen Küchengerät 2 zu verarbeitende Nahrungsmittel werden dazu in einen Verarbeitungsraum 4 gegeben, in dem eine Verarbeitungseinrichtung 5 vorgesehen ist, die vorliegend ein Rühr-/Schneidwerk sowie eine Heizung aufweist, was nicht weiter im Detail dargestellt ist.

Die Steuerung des elektrischen Küchengeräts 2 erfolgt über eine zentrale Steuereinheit 6 (CPU), die unter anderem einen Speicher 7 aufweist. Außerdem verfügt das elektrische Küchengerät 2 über eine Zusatzmodul-Anschlusseinrichtung 8 sowie über einen Magnetsensor 9. Die Zusatzmodul-Anschlusseinrichtung 8 weist eine Mehrzahl von Anschlusskontakten 10, 11 auf, wobei zwei Anschlusskontakte 10 zwei 5V-Versorgungsleitungen zugeordnet sind und der Anschlusskontakt 11 einer Datenleitung zugeordnet ist. Wie durch das nach oben verschwenkte rechte Ende des Anschlusskontaktes 11 für die Datenleitung dargestellt, ist dieser Anschlusskontakt 11 schaltbar, nämlich zwischen einem geöffneten und geschlossenen Zustand, wie nachfolgend weiter im Detail erläutert. Vorliegend befindet sich dieser Anschlusskontakt 11 in geöffnetem Zustand. Auf die Darstellung weiterer Anschlusskontakte der Zusatzmodul-Anschlusseinrichtung 8 ist der Übersichtlichkeit halber verzichtet worden.

Zu dem vorliegend beschriebenen System 1 gemäß dem ersten bevorzugten Ausführungsbeispiel der Erfindung gehört neben dem elektrischen Küchengerät 2 auch das Zusatzmodul 3, das mit einer Küchengerät-Anschlusseinrichtung 12 versehen ist. Die Küchengerät-Anschlusseinrichtung 12 weist eine Mehrzahl von Anschlusskontakten 13, 14 auf, nämlich für zwei 5V-Versorgungsleitungen und eine Datenleitung, entsprechend den Anschlusskontakten 10, 11 der Zusatzmodul-Anschlusseinrichtung 8 des elektrischen Küchengeräts 2. Im vorderen Bereich, mit dem das Zusatzmodul 3 mittels seiner Küchengerät-Anschlusseinrichtung 12 an der Zusatzmodul-Anschlusseinrichtung 8 des elektrischen Küchengeräts 2 anschließbar ist, ist ein Magnet 15 vorgesehen, der gemäß dem vorliegend beschriebenen bevorzugten Ausführungsbeispiel von einem NeodymMagneten gebildet wird. Weiterhin weist das Zusatzmodul 3 einen Speicher 16 sowie eine Funkschnittstelle 17 auf, mit der per Funk eine WLAN-Verbindung zu einem WLAN-Router hergestellt werden kann.

Bei dem Zusatzmodul gemäß dem vorliegend beschriebenen ersten bevorzugten Ausführungsbeispiel der Erfindung handelt es sich um ein Speicher- und Kommunikationsmodul, mit dem dem elektrischen Küchengerät 2 Rezeptdaten zur automatischen Herstellung von Speisen mit einer Mehrzahl von vorbestimmten Verarbeitungsfunktionen zur Verfügung gestellt werden können. Diese Rezeptdaten sind einerseits im Speicher 16 des Zusatzmoduls 3 hinterlegt. Darüber hinaus kann mittels der Funkschnittstelle 17 über den nicht weiter dargestellten WLAN-Router und das Internet Kontakt aufgenommen werden zu einem externen Server, auf dem zusätzliche Rezeptdaten hinterlegt sind, die von dort in den Speicher 16 des Zusatzmoduls 3 geladen werden können. Darüber hinaus können über diesen Weg im Speicher 16 des Zusatzmoduls 3 abgespeicherte Rezeptdaten einem Update unterzogen werden.

Wie bereits erläutert, ist der Anschlusskontakt 11 der Zusatzmodul-Anschlusseinrichtung 8 für die Datenleitung schaltbar, also derart veränderbar, dass er sich in einem geöffneten Zustand oder in einem geschlossenen Zustand befinden kann. Wie aus Fig. 1 ersichtlich, ist dieser Anschlusskontakt 11 bei nicht angeschlossenem Zusatzmodul 3 derart geschaltet, dass er offen ist, über die Zusatzmodul-Anschlusseinrichtung 8 also von außen her nicht elektrisch kontaktierbar ist. Wird nun das Zusatzmodul 3 in vorgesehener Weise an der Zusatzmodul-Anschlusseinrichtung 8 des elektrischen Küchengeräts 2 mittels der Küchengerät-Anschlusseinrichtung 12 angeschlossen, so kommt der im Bereich der Küchengerät-Anschlusseinrichtung 12 vorgesehene Magnet 15 in die Nähe des Magnetsensors 9. Dieser ist gemäß dem vorliegend beschriebenen ersten bevorzugten Ausführungsbeispiel der Erfindung als Magnetfeldschalter, nämlich als Reed-Kontakt ausgestaltet.

Die Charakteristik des Magnetsensors 9, die Stärke des Magneten 15 und die räumliche Anordnung des Magnetsensors 9 zu dem Magneten 15 in der Situation, in der das Zusatzmodul 3 vorschriftsmäßig an dem elektrischen Küchengerät 2 angeschlossen ist, sind nun derart dimensioniert, dass genau in dieser Situation von dem Magnetsensor 9 ein hinreichend großes von dem Magneten 15 herrührendes Magnetfeld erfasst wird, um damit den vorschriftsmäßigen Anschluss des Zusatzmoduls 3 an dem elektrischen Küchengerät 2 zu detektieren. Daraufhin gibt der Magnetsensor 9 ein entsprechendes Schaltsignal an die zentrale Steuereinheit 6, die ihrerseits den Anschlusskontakt 11 der ZusatzmodulAnschlusseinrichtung 8 derart schaltet, dass dieser geschlossen wird, also zur elektrischen Kontaktierung über die Zusatzmodul-Anschlusseinrichtung 8 zur Verfügung steht. Damit sind alle Anschlusskontakte 13, 14 der Küchengerät-Anschlusseinrichtung 12 elektrisch mit den Anschlusskontakten 10, 11 der Zusatzmodul-Anschlusseinrichtung 8 verbunden, so dass das Zusatzmodul 3 nicht nur mit der Versorgungsspannung von 5 V über die Anschlusskontakte 10, 13 versorgt wird, sondern auch über die Anschlusskontakte 11, 14 ein Datenaustausch zwischen dem Zusatzmodul 3, insbesondere dessen Speicher 16, und dem elektrischen Küchengerät 2, insbesondere dessen zentraler Steuereinheit 6 mit Speicher 7, erfolgen kann.

Bei dem zuvor beschriebenen ersten bevorzugten Ausführungsbeispiel der Erfindung ist es so, dass der schaltbare elektrische Anschlusskontakt 11 der Zusatzmodul-Anschlusseinrichtung 8 mittels der zentralen Steuereinheit 6 des elektrischen Küchengeräts 2 automatisch geschlossen wird, wenn mittels des Magnetsensors 9 über das von dem Magneten 15 ausgehenden Magnetfeld ein korrekter Anschluss des Zusatzmoduls 3 mit seiner Küchengerät-Anschlusseinrichtung 12 an der Zusatzmodul-Anschlusseinrichtung 8 des elektrischen Küchengeräts erfasst worden ist. Im Gegensatz dazu ist gemäß dem nachfolgend beschriebenen System 1 aus einem Küchengerät 2 und einem daran anschließbaren Zusatzmodul 3 gemäß einem zweiten bevorzugten Ausführungsbeispiel der Erfindung vorgesehen, dass ein vollständiger elektrischer Anschluss des Zusatzmoduls 3 an das elektrischen Küchengerät 2 erst dann erfolgt, wenn dies benutzerseitig initiiert worden ist.

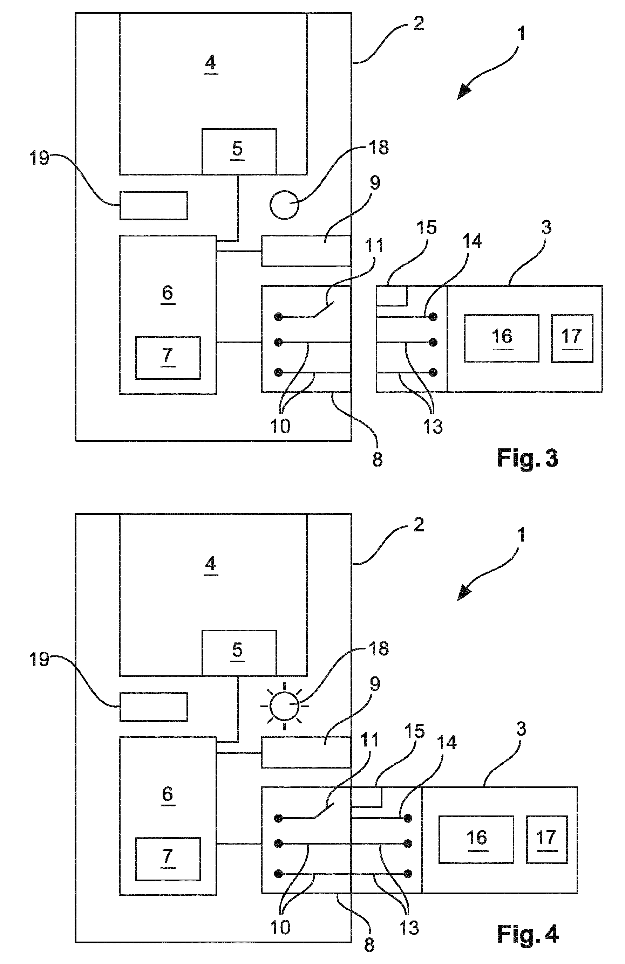

Gemäß dem aus den Fig. 3, 4 und 5 schematisch ersichtlichen System 1 gemäß dem zweiten bevorzugten Ausführungsbeispiel der Erfindung sind ein identisches Zusatzmodul 3, wie im ersten bevorzugten Ausführungsbeispiel der Erfindung, sowie ein elektrisches Küchengerät 2, wie bei dem ersten bevorzugten Ausführungsbeispiel der Erfindung vorgesehen, wobei das elektrische Küchengerät 2 lediglich um eine Anzeigeeinrichtung 18 und eine Bedieneinrichtung 19 ergänzt ist sowie einen anderen Ablauf beim Anschluss des Zusatzmoduls 3 an dem elektrischen Küchengerät 2 in der zentralen Steuereinheit 6 vorsieht. Gemäß dem zweiten bevorzugten Ausführungsbeispiel der Erfindung ist vorgesehen, dass, wie beim ersten bevorzugten Ausführungsbeispiel der Erfindung, bei nicht an dem elektrischen Küchengerät 2 angeschlossenem Zusatzmodul 3 ein Anschlusskontakt 11 der Zusatzmodul-Anschlusseinrichtung 8 des elektrischen Küchengeräts 2 geöffnet ist. Dieser Anschlusskontakt 11 ist also von außen her nicht elektrisch kontaktierbar.

Wird nun, wie in Fig. 4 dargestellt, das Zusatzmodul 3 über die Zusatzmodul-Anschlusseinrichtung 8 mit seiner Küchengerät-Anschlusseinrichtung 12 an dem elektrischen Küchengerät 2 angeschlossen, so wird der elektrische Kontakt 11 der Zusatzmodul-Anschlusseinrichtung 8 vorerst nicht geschaltet. Vielmehr wird dem Benutzer des vorliegend beschriebenen Systems 1 mittels der Anzeigeeinrichtung 18 des elektrischen Küchengeräts angezeigt, dass das Zusatzmodul 3 vorschriftsmäßig an dem elektrischen Küchengerät 2 angeschlossen ist. Vorliegend wird die Anzeigeeinrichtung 18 von einer LED gebildet, die zur Anzeige des korrekten Anschlusses des Zusatzmoduls 3 an dem elektrischen Küchengerät 2 blinkt, wie in Fig. 4 schematisch angedeutet.

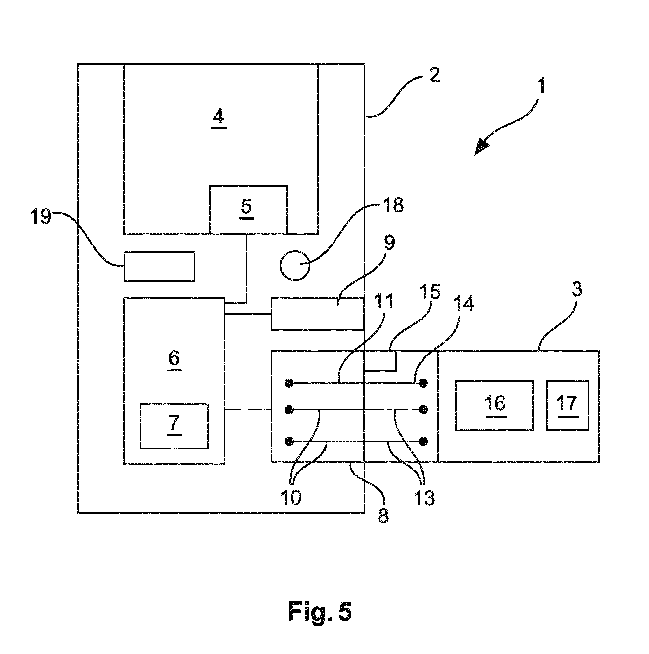

Um nun daraufhin einen vollständigen elektrischen Anschluss des Zusatzmoduls 3 an dem elektrischen Küchengerät 2 zu bewirken, ist vom Benutzer des Systems 1 am elektrischen Küchengerät 2 die Bedieneinrichtung 19, vorliegend ein Taster, zu betätigen. Wie in Fig. 5 dargestellt, wird daraufhin der schaltbare Anschlusskontakt 11 der Zusatzmodul-Anschlusseinrichtung 8 in seinen geschlossenen Zustand überführt, so dass er mit dem Anschlusskontakt 14 der Küchengerät-Anschlusseinrichtung 12 in elektrischen Kontakt kommt. Daraufhin erlischt die Anzeigeeinrichtung 18, und es ist ein vollständiger elektrischer Kontakt zwischen dem Zusatzmodul 3 und dem elektrischen Küchengerät 2 hergestellt, so dass ein Betrieb des elektrischen Küchengeräts 2 mit dem daran angeschlossenen Zusatzmodul 3, wie bereits unter Bezugnahme auf das erste bevorzugte Ausführungsbeispiel der Erfindung beschrieben, erfolgen kann.

### Bezugszeichenliste

- 1: System aus elektrischem Küchengerät und daran anbringbarem Zusatzmodul
- 2: elektrisches Küchengerät
- 3: Zusatzmodul
- 4: Verarbeitungsraum
- 5: Verarbeitungseinrichtung
- 6: zentrale Steuereinheit
- 7: Speicher des elektrischen Küchengeräts
- 8: Zusatzmodul-Anschlusseinrichtung
- 9: Magnetsensor
- 10: Anschlusskontakte für Versorgungsleitungen
- 11: Anschlusskontakt für Datenleitung
- 12: Küchengerät-Anschlusseinrichtung
- 13: Anschlusskontakte für Versorgungsleitungen
- 14: Anschlusskontakt für Datenleitung
- 15: Magnet
- 16: Speicher des Zusatzmoduls
- 17: Funkschnittstelle
- 18: Anzeigeeinrichtung
- 19: Bedieneinrichtung

## Patentansprüche

1. System aus einem elektrischen Küchengerät (2) und einem an das elektrische Küchengerät (2) elektrisch anschließbaren Zusatzmodul (3), wobei
das elektrische Küchengerät (2) eine elektrische Zusatzmodul-Anschlusseinrichtung (8) mit einer Mehrzahl von Anschlusskontakten (10, 11) zum elektrischen Anschließen des Zusatzmoduls (3) aufweist sowie mit einem Magnetsensor (9) versehen ist,
das Zusatzmodul (3) eine elektrische Küchengerät-Anschlusseinrichtung (12) mit einer Mehrzahl von Anschlusskontakten (13, 14) zum elektrischen Anschließen an das Küchengerät (2) aufweist sowie mit einem Magneten (15) versehen ist,
wenigstens einer der Anschlusskontakte (10, 11, 13, 14) der Zusatzmodul-Anschlusseinrichtung (8) bzw. der Küchengerät-Anschlusseinrichtung (12) zwischen einem geöffneten Zustand und einem geschlossenen Zustand schaltbar ist,
mit dem Magnetsensor (9) des elektrischen Küchengeräts (2) mittels des Magneten (15) des Zusatzmoduls (3) erfassbar ist, ob das Zusatzmodul (3) an der elektrischen Zusatzmodul-Anschlusseinrichtung (8) in vorbestimmter Weise angeschlossen ist und
der schaltbare Anschlusskontakt (11) nur dann zur elektrischen Kontaktierung des elektrischen Küchengeräts (2) mit dem Zusatzmodul (3) schließbar ist, wenn mittels des Magnetsensors (9) erfasst worden ist, dass das Zusatzmodul (3) in der vorbestimmten Weise an der elektrischen Zusatzmodul-Anschlusseinrichtung (8) des elektrischen Küchengeräts (2) angeschlossen ist.

2. System nach Anspruch 1, **dadurch gekennzeichnet, dass** der schaltbare Anschlusskontakt (11) ein Anschlusskontakt (11) der Zusatzmodul-Anschlusseinrichtung (8) des elektrischen Küchengeräts (2) ist und einer Datenleitung zwischen dem elektuschen Küchengerät und dem Zusatzmodul zugeordnet ist.

3. System nach einem der vorhergehenden Ansprüche, **dadurch gekennzeichnet, dass** der schaltbare Anschlusskontakt (11) automatisch geschlossen wird, wenn mittels des Magnetsensors (9) erfasst worden ist, dass das Zusatzmodul (3) in der vorbestimmten Weise an der elektrischen Zusatzmodul-Anschlusseinrichtung (8) des elektrischen Küchengeräts (2) angeschlossen ist.

4. System nach Anspruch 1 oder 2, **dadurch gekennzeichnet, dass** eine Bedieneinrichtung (19) vorgesehen ist, mit der der schaltbare Anschlusskontakt (11) benutzerseitig schließbar ist.

5. System nach Anspruch 4, **dadurch gekennzeichnet, dass** eine Anzeigeeinrichtung (18) vorgesehen ist, mit der angezeigt wird, wenn das Zusatzmodul (3) in der vorbestimmten Weise an der elektrischen Zusatzmodul-Anschlusseinrichtung (8) des elektrischen Küchengeräts (2) angeschlossen ist.

6. System nach Anspruch 5, **dadurch gekennzeichnet, dass** der schaltbare Anschlusskontakt (11) benutzerseitig nur dann schließbar ist, wenn von der Anzeigeeinrichtung (18) angezeigt wird bzw. worden ist, dass das Zusatzmodul (3) in der vorbestimmten Weise an der elektrischen Zusatzmodul-Anschlusseinrichtung (8) des elektrischen Küchengeräts (2) angeschlossen ist.

7. System nach einem der vorhergehenden Ansprüche, **dadurch gekennzeichnet, dass** der Magnetsensor (9) ein Magnetfeldschalter, vorzugsweise ein Reed-Kontakt oder ein Hall-Sensor, ist.

8. System nach einem der vorhergehenden Ansprüche, **dadurch gekennzeichnet, dass** das elektrische Küchengerät (2) zur Herstellung von Speisen nach vorbestimmten Rezeptdaten vorgesehen ist und auf dem Zusatzmodul (3) derartige Rezeptdaten abgespeichert sind.

9. System nach einem der vorhergehenden Ansprüche, **dadurch gekennzeichnet, dass** das elektrische Küchengerät (2) zur Herstellung von Speisen nach vorbestimmten Rezeptdaten vorgesehen ist und mit dem Zusatzmodul (2) eine Verbindung zu einem externen Speicher herstellbar ist, auf dem derartige Rezeptdaten abgespeichert sind.

10. System nach einem der vorhergehenden Ansprüche, **dadurch gekennzeichnet, dass** das elektrische Küchengerät (2) zur Herstellung von Speisen nach vorbestimmten Rezeptdaten mit einer Mehrzahl von Verarbeitungsfunktionen betreibbar ist und wenigstens eine dieser Bearbeitunasfunktionen nur dann bereitgestellt wird, wenn mittels des Magnetsensors (9) erfasst worden ist, dass das Zusatzmodul (3) in der vorbestimmten Weise an der elektrischen Zusatzmodul-Anschlusseinrichtung (8) des elektrischen Küchengeräts (2) angeschlossen ist.
